# EUROPÄISCHE PATENTSCHRIFT

(11) **EP 1 470 630 B1**
(45) Veröffentlichungstag und Bekanntmachung des Hinweises auf die Patenterteilung: **12.12.2007**
(21) Anmeldenummer: 02782713.8
(22) Anmeldetag: 11.10.2002
(51) Int. Cl.: H02K 11/02, H01R 39/54, H04B 15/02, H02K 11/00

(54) **VORRICHTUNG ZUR FUNKENTSTÖRUNG EINER ELEKTRISCHEN KOMMUTATORMASCHINE**
DEVICE FOR SUPPRESSING THE RADIO-INTERFERENCE OF AN ELECTRIC COMMUTATOR
DISPOSITIF D'ANTIPARASITAGE D'UNE MACHINE DE COMMUTATION ELECTRIQUE

(30) Priorität: 22.01.2002 DE 10202161
(43) Veröffentlichungstag der Anmeldung: 27.10.2004
(73) Patentinhaber: ROBERT BOSCH GMBH, 70442 Stuttgart (DE)
(72) Erfinder: SCHMIEDERER, Claus, 77688 Rheinau-Freistett (DE); HAERER, Michael, 77830 Buehlertal (DE); MAMIER, Rolf, 79361 Sasbach (DE); STRUPP, Michael, Cheongwon-Gun 100-00 (KR)
(86) Internationale Anmeldenummer: PCT/DE2002/003871
(87) Internationale Veröffentlichungsnummer: WO 2003/063323

(56) Entgegenhaltungen:
- EP-A- 0 682 400
- DE-A- 2 813 110
- DE-A- 10 119 734
- FR-A- 1 320 096
- GB-A- 2 287 133

## Beschreibung

### Stand der Technik

Die Erfindung betrifft eine Vorrichtung zur Funkentstörung einer elektrischen Kommutatormaschine, insbesondere eines Gleichstrommotors, nach der Gattung des Anspruchs 1. Derartige Entstörvorrichtungen für elektrische Motoren sind in Kraftfahrzeugen gebräuchlich.

Weiterhin ist aus der EP 0369 746 A ein elektrischer Gleichstrom- Kleinmotor bekannt, dessen Kommutator mit einer ringförmigen Varistoranordnung zur Unterdrückung von Funkstörungen bestückt ist. Dabei ist der Varistorring mittels einer der Zahl der Kommutatorlamellen entsprechenden Anzahl von Kontakten mit den Lamellen des Kommutators verbunden. Eine Stirnfläche des Varistorrings kann mit leitfähigem Material beschichtet sein zur Ausbildung einer Kapazität zwischen den einzelnen Kollektorlamellen. Der Varistorring ist über Anschlussdrähte mit den Kollektorlamellen verbunden. Eine derartige Anordnung besitzt nur eine begrenzte Entstörleistung und sie ist nur in einem Teilbereich des interessierenden Frequenzbandes wirksam.

Aus der DE 199 53 231 A ist ein Elektromotor mit einem Mittel zur Funkentsörung bekannt, welches ringförmig ausgebildet und direkt am Kommutator angeordnet ist. Das aus keramischem Material bestehende Entstörmittel kann zwar mit einer geringen Baugröße hergestellt und unmittelbar am Kommutator angeordnet werden, wegen der durch das Keramikmaterial und das Herstellungsverfahren vorgegebenen elektrischen Werte ist jedoch nur eine begrenzte Entstörwirkung erreichbar.

GB2287133 beschreibt einen Entstörring, der zwischen den einzelnen Kommutatorlamellen jeweils einen Kondensator zur Entstörung aufweist. Der Entstörring ist in EP0682400 aus Varistoren gebildet.

Der Erfindung liegt die Aufgabe zugrunde, bekannte Vorrichtungen zur Funkentstörung von elektrischen Kommutatormaschinen, insbesondere von Gleichstrommotoren, dahingehend zu verbessern, dass eine befriedigende Entstörleistung in einem großen Störfrequenzbereich erzielt wird. Dies wird erreicht durch die kennzeichnenden Merkmale des Anspruches 1.

Als vorteilhaft hat es sich erwiesen, wenn der Entstörring mit einer Dreieckschaltung aus äußeren Kondensatoren zwischen den Anschlussklemmen der elektrischen Maschine zur Bildung der Entstörvorrichtung gekoppelt ist, wobei ein Schenkel der Dreieckschaltung zwischen den Motoranschlussklemmen liegt, während die beiden anderen Schenkel der Dreieckschaltung miteinander verbunden und gemeinsam an Masse gelegt sind. Mit einer derartigen Gesamtvorrichtung können einerseits beim Entstörring und andererseits bei den äußeren Entstörkondensatoren gezielt Kapazitätswerte vorgegeben werden zur Entstörung bestimmter Frequenzbänder. Hierbei ist der äußere Entstörkondensator zwischen den Anschlussklemmen der elektrischen Maschine insbesondere im unteren störenden Frequenzbereich wirksam beim Rundfunkempfang, also insbesondere im Langwellen- und Mittelwellenbereich, während die beiden anderen, mit einem Anschluss zusammengeschalteten und an Masse gelegten Kondensatoren insbesondere im Frequenzbereich oberhalb von 30 Mhz wirksam sind, also besonders im UKW- Bereich. Durch die erfindungsgemäße Kombination des Entstörrings mit wenigstens einem weiteren äußeren Entstörkondensator wird weiterhin eine sehr geringe Baugröße aller Entstörelemente ermöglicht, welche wiederum die Anordnung der Entstörelemente unmittelbar in dem Bereich des Elektromotors zulässt, wo die Störungen entstehen, das heißt im Bereich von Kommutator und Bürsten.

Die erfindungsgemäße Kombination des raumsparenden Entstörrings mit verhältnismäßig kleinen äußeren Kondensatoren ermöglicht es in besonders vorteilhafter Weise, letztere als SMD (Surface Mounted Devices) - Bauelemente auszubilden und diese auf einer Leiterplatte direkt am Bürstenhalter, vorzugsweise zwischen den Bürstenanschlusskontakten, anzuordnen. Der Bürstenhalter selbst dient hierbei als elektrischer und mechanischer Träger der Leiterplatte, wodurch neben der Einsparung zusätzlicher Befestigungsteile auch die vorteilhafte Anordnung direkt im Bereich der Entstehung der Störungen möglich wird.

Der Entstörring ist zweckmäßigerweise direkt am Kommutator angeordnet und dort elektrisch und mechanisch befestigt. Hierbei ist es insbesondere möglich, den Entstörring in den Kommutatorträger zu integrieren oder unmittelbar an diesem zu befestigen, wodurch sich auch eine Anordnung des Entstörrings unmittelbar in dem Bereich realisieren läßt, wo die Störungen entstehen und unterdrückt werden sollen.

Hinsichtlich des Aufbaues und des Anschlusses des Entstörrings haben sich zwei Varianten als besonders vorteilhaft erwiesen. Hierbei können entweder die einzelnen Elemente des Entstörrings jeweils mit einem ihrer Anschlüsse mit einer Kommutatorlamelle kontaktiert werden, während die anderen Anschlüsse der Entstörelemente untereinander verbunden sind und so einen virtuellen Nullpunkt bilden. Die andere vorteilhafte Anschlussmöglichkeit der einzelnen Elemente des Entstörrings besteht darin, dass diese mit ihren beiden Anschlüssen mit benachbarten Kollektorlamellen verbunden werden. Dieser Reihenschaltung der Entstörelemente über die Kollektorlamellen kann noch eine direkte Verbindung der Elemente untereinander parallel geschaltet werden.

Weitere Einzelheiten und vorteilhafte Weiterbildung der Erfindung ergeben sich aus der Beschreibung der Ausführungsbeispiele anhand der Figuren. Diese zeigen in
Figur 1 eine Prinzipdarstellung einer erfindungsgemäßen Vorrichtung zur Funkentstörung einer elektrischen Kommutatormaschine, in
Figur 2 ein erstes Ausführungsbeispiel einer Schaltungsanordnung zur Funkentstörung einer Kommutatormaschine, wobei die Einzelelemente des Entstörrings zur einem virtuellen Nullpunkt zusammengeschaltet sind, in
Figur 3 eine zweites Ausführungsbeispiel einer Schaltungsanordnung zur Funkentstörung einer Kommutatormaschine bei der die Einzelelemente des Entstörrings jeweils mit benachbarten Kommutatorlamellen verbunden sind, in
Figur 4 einen Längsschnitt durch eine Gleichstrommotor mit einer erfindungsgemäßen Vorrichtung zur Funkentstörung und in
Figur 5 ein Schaltbild einer Leiterplatte mit Entstörkondensatoren in SMD- Bauweise.

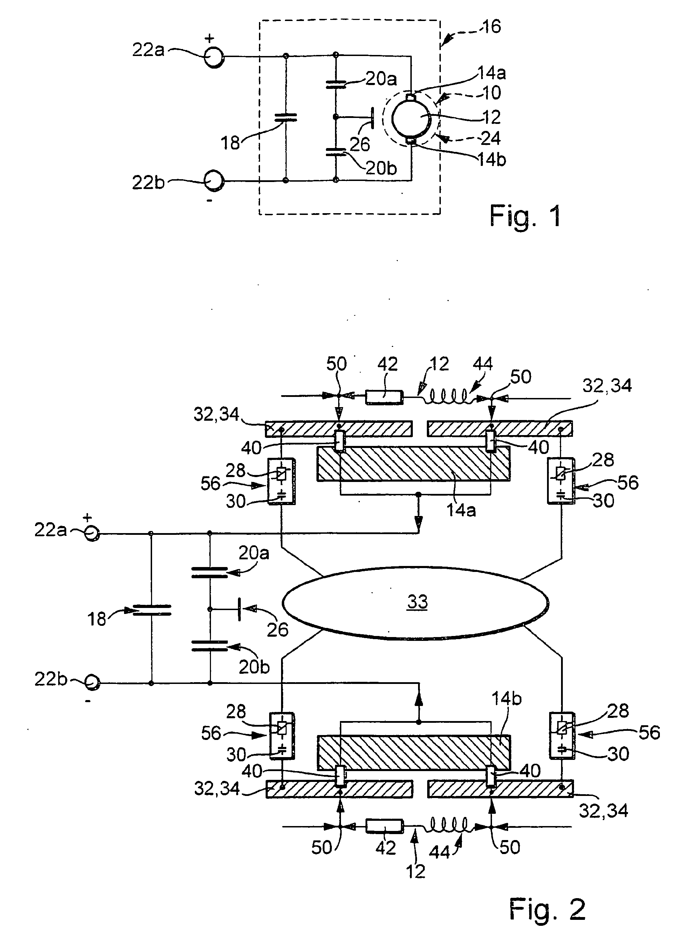

Figur 1 zeigt das Prinzip einer erfindungsgemäßen Vorrichtung zur Funkentstörung eines Gleichstrommotors 10, dessen Rotor 12 über Bürsten 14a und 14b mit einem Gleichstromnetz verbunden ist. Eine mit einer gestrichelten Linie umrandete Entstörschaltung 16 für den Gleichstrommotor 10 enthält äußere Entstörkondensatoren 18, 20a und 20b, wobei der Kondensator 18 in der Regel als Cx und die Kondensatoren 20a und 20b als Cy bezeichnet werden. Der Kondensator 18 liegt zwischen den Anschlussklemmen 22a und 22b des Gleichstromnetzes, die Kondensatoren 20a und 20b sind in Reihe ebenfalls zwischen die Anschlussklemmen 22a und 22b geschaltet, wobei der Verbindungspunkt der Kondensatoren 20a und 20b an einem Masseanschluss 26 liegt. Die äußeren Entstörkondensatoren 18 sowie 20a und 20b bilden somit eine Dreieckschaltung, von deren Eckpunkten zwei mit den Anschlussklemmen 22a und 22b des Motors und der dritte Eckpunkt mit Masse 26 verbunden ist.

Als weitere Entstörmaßnahme enthält die Entstörschaltung 16 einen Entstörring 24, dessen Aufbau und Verschaltung im Folgenden noch erläutert wird. Der Entstörring 24, welcher auch als Scheibe ausgebildet sein kann, ist den Bürsten 14a,b des Rotors 12 und damit der Störquelle des Motors direkt zugeordnet. Dies gilt in hohem Maße auch für die äußeren Entstörkondensatoren 18 und 20a, 20b, was anhand der folgenden Figuren noch detaillierter beschrieben wird. Im Gegensatz zu herkömmlichen Schaltungen zur Funkentstörung eines elektrischen Motors, welche üblicherweise durch den Anbau eines externen Entstörfilters realisiert sind, erhält man durch die erfindungsgemäße Vorrichtung eine räumliche und bauliche Optimierung der Entstörvorrichtung, welche insbesondere eine Integration der Entstörelemente unmittelbar in den Bereich der Störquelle, nämlich das Kommutierungssystem aus Kommutator und Bürsten, erlaubt. Die erfindungsgemäße Entstörvorrichtung kommt aufgrund dieser Integrationsmöglichkeit in das Kommutierungssystem ohne Induktivitäten in den Motorzuleitungen aus, welche bei herkömmlichen Schaltungen aufgrund ihrer Anordnung in den Motoranschlussleitungen für den vollen Motorstrom ausgelegt sein müssen und daher eine erhebliche Bauteilgröße besitzen und hohe Kosten verursachen.

In Figur 2 ist der Rotor 12 eines Gleichstrommotors im Bereich der Bürsten 14a, 14b detaillierter dargestellt. Die Anordnung der Kondensatoren 18 sowie 20a und 20b ist anhand der Figur 1 bereits erläutert und bleibt bei der Anordnung gemäß Figur 2 unverändert. Die einzelnen Bauelemente des Entstörrings 24 sind in Figur 2 mit der Bezugsziffer 56 versehen. In der dargestellten Ausführungsform enthalten sie jeweils einen Varistor 28 und einen Kondensator 30, wobei der Varistor 28 auch durch einen Ohm'schen Widerstand ersetzt oder ergänzt werden kann. Mit 32 sind die Lamellen des Kommutators 34 bezeichnet, mit denen die einzelnen Entstörelemente 56 jeweils mit einem Anschluss verbunden sind. Der Übergangswiderstand zwischen einer Bürste 14a, 14b und einer Lamelle 32 des Kommutators 34 ist mit 40 bezeichnet. Die von den Lamellen 32 abgewandten Enden der Entstörbauelemente 56 sind bei der Anordnung gemäß Figur 2 untereinander ringförmig verbunden und bilden einen virtuellen Nullpunkt 33.

Die Wicklung des Rotors 12 ist in Figur 2 durch den jeweiligen Wicklungswiderstand 42 und die jeweilige Wicklungsinduktivität 44 zwischen zwei Kollektorlamellen 32 anghegeben, die Wicklungsanschlüsse am Kommutator sind mit 50 bezeichnet.

Im Betrieb des Motors entstehen bei jeder Kommutierung Funken, da beim Verschieben einer Bürste 14a,b von einer Lamelle 32 zur nächsten die entsprechende Wicklungsinduktivität 44 über den Wicklungswiderstand 42 und die Bürstenübergangswiderstände 40 kurzgeschlossen wird. Die in der Wicklungsinduktivität 44 gespeicherte Energie kann sich jedoch nicht vollständig abbauen, wenn der Kurzschluss über die Bürste 14a, beziehungsweise 14b beendet wird, bevor die in der Wicklungsinduktivität 44 gespeicherte Energie im Wicklungswiderstand 42 als Wärme abgebaut wurde. In diesem Fall bildet sich zwischen der Bürste 14 und dem ablaufenden Ende der Lamelle 32 eine Funkenentladung, welche einerseits die Lebensdauer des Motors verringert und andererseits die Funkstörung verursacht. Diese.gilt es nun durch die vorgeschlagenen Maßnahmen zu unterdrücken oder zumindest auf ein hinsichtlich der elektromagnetischen Verträglichkeit (EMV) zulässiges Maß zu reduzieren, wobei das Augenmerk insbesondere auf der leitungsgebundenen Störabstrahlung im Lang- Mittel- und Kurzwellenbereich liegt.

Erfindungsgemäß kann die Funkstörung nun in besonders wiksamer und wirtschaftlicher Weise durch die Kombination des Entstörrings 24 mit wenigstens einem äußeren Kondensator 18 erreicht werden, wobei jedes Element des Entstörrings 24 vorzugsweise einen Varistor 28 und einen Kondensator 30 enthält. Hierbei ist der Entstörring 24 insbesondere im Frequenzbereich von etwa 30 MHz bis zu 120 MHz, also insbesondere im UKW Bereich wirksam, der oder die äußereren Entstörkondensatoren 18 im Frequenzbereich darunter, das heißt im Bereich der Radiofrequenzen von Langwelle, Mittelwelle und Kurzwelle. Der äußere Kondensator 18 besitzt dabei einen Kapazitätswert zwischen etwa 150 nF und einigen µF. Kommen die äußeren Entstörkondensatoren 20a und 20b hinzu, welche jeweils etwa 1/10 des Kapazitätswertes des Kondensators 18 besitzen, so reicht die Wirksamkeit der Dreieckschaltung aus den Filterkondensatoren 18, 20a und 20b von etwa 10 kHz bis zu cirka 50 MHz. Durch die Kombination der beiden Entstörmaßnahmen lässt sich somit der gesamte interessierende Störspannungs- Frequenzbereich abdecken, wobei auch nicht leitungsgebundene Störfeldstärken im UKW Bereich unterdrückt werden. Hierbei unterstützen die mit ihrem einen Ende verbundenen und an Masse gelegten äußeren Entstörkondensatoren 20a und 20b auch die Wirkung des Entstörrings 24, dessen Einzelelemente 56 durch die Zusammenschaltung zu einem virtuellen Nullpunkt 33 eine ähnliche Wirkung zeigen. Dabei liegen die Kapazitätswerte der Kondensatoren 30 der Bauelemente 56 zwischen etwa 1nF und 300nF, die Varistoren 28 erzeugen bei einem Stromdurchgang von 10 mA einen Spannungsabfall zwischen etwa 1V und 100V. Zusätzliche ohmsche Widerstände in Reihe oder gegebenenfalls auch parallel zum Varistor 28 und/oder zum Kondensator 30 der Entstörelemente 56 können einen Widerstand zwischen etwa 1 Ohm und 100 kOhm besitzen. Der kapazitive Anteil der Entstörelemente 56 ist dabei auch durch ihren Aufbau bedingt, da die aus Keramikmaterial hergestellten Entstörelemente 56 eine gewissen Kapazität besitzen, die durch Fertigungsmaßnahmen in Grenzen variierbar ist.

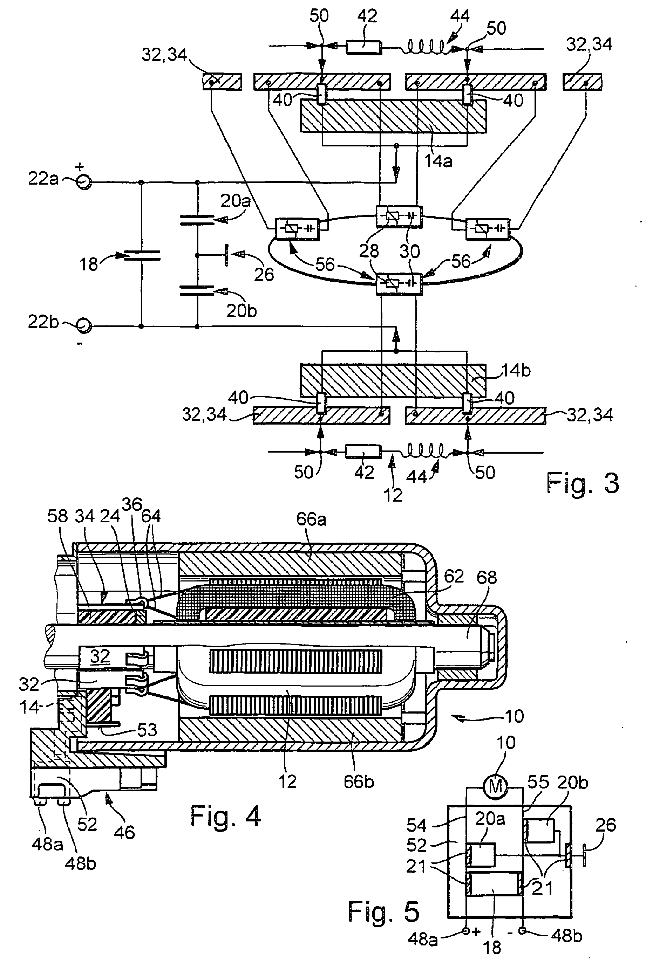

Die Schaltungsanordnung nach Figur 3 entspricht weitgehend derjenigen von Figur 2, wobei gleiche Teile mit gleichen Bezugszeichen versehen sind und hier nicht noch einmal beschrieben werden. Abweichend von der Schaltungsanordnung gemäß Figur 2, wo die Entstörelemente 56 nur mit einem ihrer Anschlüsse mit einer Kollektorlamelle 32 verbunden sind, liegen die einzelnen Entstörelemente 56 bei der Anordnung gemäß Figur 3 mit ihren beiden elektrischen Anschlüssen an benachbarten Lamellen 32. Benachbarte Entstörelemente 56 sind somit über die Lamellen 32 miteinander verbunden. Zusätzlich sind sie über Verbindungen zwischen ihren Anschlüssen direkt miteinander kotaktiert und bilden so einen Entstörring. Im Gegensatz hierzu hatte die Kontaktebene des Verbindungsrings 33 in Figur 2 keine elektrische Niederfrequenz- Verbindung sondern bildete mit dem Ring 33 einen virtuellen Nullpunkt. Bei der Schaltungsanordnung gemäß Figur 3 ist die Gesamtheit der Entstörelemente 56 in Reihe geschaltet und somit elektrisch gekoppelt. Die in der Wicklunginduktivität 44 gespeicherte Kommututierungsenergie wird hier von jeweils einem Entstörelement 56 aufgenommen. Diese Schaltung könnte auch mit diskreten Bauelementen realisiert werden, beispielsweise in SMD- Ausführung, wobei die Schaltungselemente am Kommutator 34 zwischen den Lamellen 32 angeordnet sind.

Bei der Anordnung gemäß Figur 2 erfolgt die Bedämpfung des Störspannungsimpulses somit über mindestens zwei in Serie geschaltete Entstörelemente 56. Diese bilden zusammen eine parallel zu den Motoranschlüssen liegende Entsöreinheit aus, welche außer dem Kommutierungs-Bürstenfeuer auch Störimpuse auf dem Bordnetz bedämpft.

Bei der Anordnung gemäß Figur 3 dagegen erfolgt die Bedämpfung des Störspannungsimpulses über ein einzelnes Entstörelement 56, das direkt mit seinen Anschlüssen mit der als Lastschalter wirkenden Kombination aus Kohlebürste und Kommutatorlamelle kontaktiert ist. Durch diese größtmögliche räumliche Nähe des Entstörelementes 56 zur Störquelle ist eine optimale Entstörung realisierbar.

Figur 4 zeigt einen Längsschnitt durch einen Gleichstrommotor 10, wobei gleiche Teile wiederum gleiche Bezugszeichen wie in den vorangegangenen Figuren 1 bis 3 tragen. Dabei ist der Motor im oberen Teil im Schnitt gezeichnet, im unteren Teil in der aufgeschnittenen Ansicht, worin eine Bürste 14 und die Oberfläche der Lamellen 32 sichtbar ist. Wie aus der Schnittdarstellung im oberen Teil der Figur 4 ersichtlich, ist der Entstörring 24 mit dem Kommutator- Grundkörper 58 vereinigt und liegt unterhalb der Anschlusshaken 36 der Kommutatorlamellen 34. Alternativ wäre beispielsweise eine Befestigung des Entstörrings 24 direkt oder indirekt an der äußeren Stirnfläche des Kommutators- Grundkörper 58 möglich.

An den Anschlusshaken 36 ist die Ankerwicklung 62 über Kommutator- Anschlussdrähte 64 befestigt, wobei diese Befestigungspunkte den Wicklungsanschlüssen 50 aus den Figuren 2 und 3 entsprechen. Auf den Kommutatorlamellen 32 sitzen die mit 14 bezeichneten Bürsten auf, welche ihrerseits in dem Bürstenhalter 46 gehalten und durch eine Andrückfeder 53 an den Kommutator 34 angelegt sind. Der Bürstenhalter 46 trägt weiterhin Steckanschlüsse 48a und 48b, welche den Anschlussklemmen 22a und 22b aus den Figuren 2 und 3 entsprechen. An diesen Steckanschlüssen 48a,b ist eine Leiterplatte 52 mechanisch und elektrisch befestigt, welche hinsichtlich ihres Aufbaus in Figur 5 detaillierter dargestellt ist.

Schließlich sind in Figur 4 noch die Statormagnete 6a und 6b erkennbar, welche als Dauermagnete ausgeführt sind. Der Rotor 12 sitzt einschließlich des Kommutators 24 auf der Rotorwelle 68, weitere konstruktive Einzelheiten sind nicht dargestellt. Wesentlich erscheint, dass die Gesamtheit der Vorrichtung zur Funkentstörung im Bereich des Bürstenhalters und des Kommutators konzentriert ist, sodass die Störungen direkt an ihrem Entstehungsort unterdrückt werden können und Leitungsverbindungen weitestgehend vermieden werden.

In Figur 5 ist die Leiterplatte 52 mit den Kondensatoren 18 sowie 20a und 20b dargestellt. Die von den Steckanschlüssen 48a und 48b des Bürstenhalters 46 zu den Bürsten des Motors 10 führenden Leiterbahnen sind mit 54 und 55 bezeichnet. Mit diesen Leiterbahnen 54 und 55 sind die als SMD- Bauelemente ausgeführten Kondensatoren 18, 20a und 20b über Metallisierungs-Anschlüsse 21 direkt kontaktiert. Eine weitere Verbindung besteht zu der an Masse 26 liegenden Leiterplatte 58, wo auch jeweils ein Anschluss der Kondensatoren 20a und 20b entsprechend den Schaltungsanordnungen in den Figuren 2 und 3 kontaktiert ist.

Die kompakte Bauweise der gesamten Vorrichtung zur Funkentstörung wird somit durch die Kombination des Entstörrings 24 mit diskreten Entstörelementen in Form der Entstörkondensatoren 18, 20a und 20b geschaffen, wobei letztere aufgrund der relativ niedrigen erforderlichen Kapazitätswerte besonders raumsparend als SMD- Bauelemente ausführbar sind, was wiederum ebenso wie beim Entstörring 24 die Möglichkeit der Unterbringung in unmittelbarer Nähe der Störquelle eröffnet. Aufwendige und teure Entstörinduktivitäten können entfallen und es wird eine vollständige Motorentstörung ohne bedrahtete Bauelemente möglich, wodurch wiederum eine Reduktion von parasitären Leitungsbelägen erreicht wird. Schließlich kann auch der Bürstenhalter 46 kompakter und leichter ausgebildet werden, da er keine größeren diskrete Bauelemente aufnehmen muss.

## Patentansprüche

1. Vorrichtung zur Funkentstörung einer elektrischen Kommutatormaschine, insbesondere eines Gleichstrommotors (10), mit einem über Bürsten (14a, 14b) und Kommutatorlamellen (32) eines Kommutators (34) gespeisten Rotor (12) und mit einer Entstörschaltung (16), welche wenigstens einen Kondensator (18, 20a, 20b) und weitere Entstörelemente (28, 30, 56) aufweist, **dadurch gekennzeichnet, dass** die Entstörschaltung (16) einerseits einen Entstörring (24) oder eine Entstörscheibe mit wenigstens einem Varistor (28) oder einem Widerstand und wenigstens einem Kondensator (30) sowie andererseits wenigstens einen weiteren äußeren Entstörkondensator (18, 20a, 20b) enthält, wobei der Entstörring (24) entweder mit einem Kommutator-Grundkörper (58) des Kommutators (34) vereinigt ist und unterhalb von Anschlusshaken (36) der Kommutatorlamellen (32) liegt oder direkt oder indirekt an einer äußeren Stirnfläche des Kommutator-Grundkörpers (58) befestigt ist.

2. Entstörvorrichtung nach Anspruch 1, **dadurch gekennzeichnet, dass** der Entstörring (24) mit wenigstens einem äußeren Entstörkondensator (18,20) zwischen den Anschlussklemmen (22a,b) der elektrischen Maschine (10) gekoppelt ist.

3. Entstörvorrichtung nach Anspruch 1 oder 2, **dadurch gekennzeichnet, dass** der Entstörring (24) mit einer Dreieckschaltung aus äußeren Kondensatoren (18; 20a,b) gekoppelt ist, welche einerseits zwischen den Motoranschlussklemmen (22a,b) und andererseits an Masse (26) liegt.

4. Entstörvorrichtung nach einem der vorhergehenden Ansprüche, **dadurch gekennzeichnet, dass** der oder die äußeren Kondensatoren (18; 20a,b) und /oder der Entstörring (24) baulich mit der Störquelle (34, 38) eng verbunden sind.

5. Entstörvorrichtung nach einem der vorhergehenden Ansprüche, **dadurch gekennzeichnet, dass** der oder die äußeren Kondensatoren (18; 20a,b) auf einer Leiterplatte (52) angeordnet sind.

6. Entstörvorrichtung nach Anspruch 5, **dadurch gekennzeichnet, dass** die Leiterplatte (52) am Bürstenhalter (46) elektrisch und mechanisch befestigt ist.

7. Entstörvorrichtung nach einem der vorhergehenden Ansprüche, **dadurch gekennzeichnet, dass** die weiteren Entstörkondensatoren (18; 20a,b) als SMD- Bauelemente ausgebildet und auf einer Leiterplatte (52) vorzugsweise am Bürstenhalter (46) angeordnet sind.

8. Entstörvorrichtung nach einem der vorhergehenden Ansprüche, **dadurch gekennzeichnet, dass** der Entstörring (24) am Kommutator (34) elektrisch und mechanisch befestigt ist.

9. Entstörvorrichtung nach einm der vorhergehenden Ansprüche, **dadurch gekennzeichnet, dass** der Entstörring (24) zwischen benachbarten Wicklungsanschlüssen (50) am Kommutator (34) jeweils wenigstens einen Varistor (28) und einen Kondensator (30) als Entstörelemente aufweist.

10. Entstörvorrichtung nach einem der vorhergehenden Ansprüche, **dadurch gekennzeichnet, dass** die einzelnen Elemente (28, 30) des Entstörrings (24) einerseits jeweils mit einem Anschluss mit einer Kommutatorlamelle (32) kontaktiert und andererseits jeweils mit ihrem zweiten Anschluss miteinander verbunden sind zur Bildung eines virtuellen Nullpunkts (33).

11. Entstörvorrichtung nach einem der Ansprüche 1 bis 9, **dadurch gekennzeichnet, dass** die einzelnen Elemente (28, 30) des Entstörrings (24) mit ihren beiden Anschlüssen mit benachbarten Kollektorlamellen (32) und/oder untereinander direkt verbunden sind.

## Claims

1. Apparatus for radio interference suppression of an electrical commutator machine, in particular a DC motor (10), comprising a rotor (12), which is fed via brushes (14a, 14b) and laminations (32) of a commutator (34), and comprising an interference-suppression circuit (16) which has at least one capacitor (18, 20a, 20b) and further interference-suppression elements (28, 30, 56), **characterized in that** the interference-suppression circuit (16) firstly has an interference-suppression ring (24) or an interference-suppression disc with at least one varistor (28) or a resistor and at least one capacitor (30), and secondly at least one further outer interference-suppression capacitor (18, 20a, 20b), with the interference-suppression ring (24) being combined either with a base body (58) of the commutator (34) and being situated beneath connection hooks (36) of the commutator laminations (32) or being directly or indirectly attached to an outer end face of the commutator base body (58).

2. Interference-suppression apparatus according to Claim 1, **characterized in that** the interference-suppression ring (24) is coupled to at least one outer interference-suppression capacitor (18, 20) between the connection terminals (22a, b) of the electrical machine (10).

3. Interference-suppression apparatus according to Claim 1 or 2, **characterized in that** the interference-suppression ring (24) is coupled to a delta circuit comprising outer capacitors (18; 20a, b) which is connected between the motor connection terminals (22a, b) at one end and to earth (26) at the other end.

4. Interference-suppression apparatus according to one of the preceding claims, **characterized in that** the outer capacitor or capacitors (18; 20a, b) and/or the interference-suppression ring (24) are physically closely connected to the interference source (34, 38).

5. Interference-suppression apparatus according to one of the preceding claims, **characterized in that** the outer capacitor or capacitors (18; 20a, b) are arranged on a printed circuit board (52).

6. Interference-suppression apparatus according to Claim 5, **characterized in that** the printed circuit board (52) is electrically and mechanically attached to the brush holder (46).

7. Interference-suppression apparatus according to one of the preceding claims, **characterized in that** the further interference-suppression capacitors (18; 20a, b) are in the form of SMD components and are arranged on a printed circuit board (52), preferably on the brush holder (46).

8. Interference-suppression apparatus according to one of the preceding claims, **characterized in that** the interference-suppression ring (24) is electrically and mechanically attached to the commutator (34).

9. Interference-suppression apparatus according to one of the preceding claims, **characterized in that** the interference-suppression ring (24) in each case has at least one varistor (28) and a capacitor (30) as interference-suppression elements between adjacent winding connections (50) on the commutator (34).

10. Interference-suppression apparatus according to one of the preceding claims, **characterized in that** firstly a connection to a commutator lamination (32) makes contact with each of the individual elements (28, 30) of the interference-suppression ring (24), and secondly the said individual elements of the interference-suppression ring are each connected to one another by their second connection in order to form a virtual zero point (33).

11. Interference-suppression apparatus according to one of Claims 1 to 9, **characterized in that** the individual elements (28, 30) of the interference-suppression ring (24) are directly connected to adjacent collector laminations (32) and/or to one another by their two connections.

## Revendications

1. Dispositif de déparasitage d'un moteur électrique à commutation, notamment d'un moteur à courant continu (10) comportant un rotor (12) alimenté par un collecteur (34) par l'intermédiaire de balais (14a, 14b) et de lamelles de collecteur (32) ainsi qu'un circuit de déparasitage (16) ayant au moins un condensateur (18, 20a, 20b) et d'autres éléments de déparasitage (28, 30, 56),
**caractérisé en ce que**
le circuit de déparasitage (16) comporte, d'une part, une bague de déparasitage (24) ou un disque de déparasitage avec au moins un varistor (28) ou une résistance et au moins un condensateur (30) ainsi que, d'autre part, au moins un autre condensateur de déparasitage (18, 20a, 20b),
la bague de déparasitage (24) étant soit réunie au corps de base (58) du collecteur (34) et se situe en dessous des crochets de branchement (36) de lamelles de collecteur (32) soit fixée directement ou indirectement elle à la surface frontale extérieure du corps de base (58) du collecteur.

2. Dispositif de déparasitage selon la revendication 1,
**caractérisé en ce que**
la bague de déparasitage (24) est couplée à au moins un condensateur de déparasitage (18, 20) extérieur entre les bornes de branchement (22a, b) de la machine électrique (10).

3. Dispositif de déparasitage selon les revendications 1 ou 2,
**caractérisé en ce que**
la bague de déparasitage (24) est couplée à un montage en triangle formé de condensateurs extérieurs (18, 20a, b) reliés d'une part entre les bornes de branchement du moteur (22a, b) et d'autre part à la masse (26).

4. Dispositif de déparasitage selon l'une des revendications précédentes,
**caractérisé en ce que**
le ou les condensateurs extérieurs (18, 20a, b) et/ou la bague de déparasitage (24) sont reliés étroitement par construction à la source de parasites (34, 38).

5. Dispositif de déparasitage selon l'une des revendications précédentes,
**caractérisé en ce que**
le ou les condensateurs extérieurs (18, 20a, b) sont installés sur une plaque de circuit (52).

6. Dispositif de déparasitage selon la revendication 5,
**caractérisé en ce que**
la plaque de circuit (52) est fixée électriquement et mécaniquement à un support de balai (46).

7. Dispositif de déparasitage selon l'une quelconque des revendications précédentes,
**caractérisé en ce que**
les autres condensateurs de déparasitage (18, 20a, b) sont des composants SMD et sont installés sur une plaque de circuit (52), de préférence sur un support de balai (46).

8. Dispositif de déparasitage selon l'une quelconque des revendications précédentes,
**caractérisé en ce que**
la bague de déparasitage (24) est fixée électriquement et mécaniquement au collecteur (34).

9. Dispositif de déparasitage selon l'une des revendications précédentes,
**caractérisé en ce que**
la bague de déparasitage (24) comporte entre les bornes de branchement de bobinage voisines (50) sur le collecteur (34), chaque fois au moins un varistor (28) et un condensateur (30) comme éléments de déparasitage.

10. Dispositif de déparasitage selon l'une des revendications précédentes,
**caractérisé en ce que**
les différents éléments (28, 30) de la bague de déparasitage (24) sont chaque fois en contact d'une part par une borne avec une lamelle de collecteur (32) et d'autre part par leur autre borne et ils sont reliés entre eux pour former un point zéro virtuel (33).

11. Dispositif de déparasitage selon l'une des revendications 1 à 9,
**caractérisé en ce que**
les différents éléments (28, 30) de la bague de déparasitage (24) sont reliés par leurs deux branchements à des lamelles de collecteur (32) voisines et/ou sont reliés directement entre eux.
